# EUROPEAN PATENT SPECIFICATION

(11) **EP 2 300 305 B1**
(45) Date of publication and mention of the grant of the patent: **23.11.2011**
(21) Application number: 08789974.6
(22) Date of filing: 06.06.2008
(51) Int. Cl.: B62H 5/00, B60R 25/00

(54) **ANTI-THEFT DEVICE FOR TWO- OR THREE-WHEEL VEHICLES HAVING A BUTTON LOCK BLOCKING THE CENTRAL STAND IN A PARKING POSITION**
DIEBSTAHLSICHERUNGSVORRICHTUNG FÜR ZWEI- ODER DREIRÄDRIGE FAHRZEUGE MIT EINER DEN MITTELSTÄNDER IN EINER PARKPOSITION SPERRENDEN KNOPFVERRIEGELUNG
DISPOSITIF ANTIVOL POUR VÉHICULE À DEUX OU TROIS ROUES POSSÉDANT UN VERROU À BOUTON BLOQUANT LA BÉQUILLE CENTRALE DANS UNE POSITION DE STATIONNEMENT

(43) Date of publication of application: 30.03.2011
(73) Proprietor: C.M. S.r.l., 84126 Salerno (IT)
(72) Inventor: CAPUANO, Ernesto, I-84080 Pellezzano SA (IT)
(74) Representative: Papa, Elisabetta
(86) International application number: PCT/IT2008/000379
(87) International publication number: WO 2009/147690

(56) References cited:
- EP-A- 0 077 431
- WO-A-2007/099501
- FR-A- 2 554 072
- FR-A- 2 667 563

## Description

### Field of the invention

The present invention refers to a mechanical-type anti-theft device for two- or three-wheel vehicles, and in particular for motor vehicles.

### State of the art

Theft of two-wheel vehicles is a social problem, increasing proportionally to the growth of the reference market. Today, two-wheel vehicles are no more a mere pastime, representing for millions of people a fundamental means of transport to reach and carry out one's own working activity, in cities ever more congested by traffic. The anti-theft devices that over the years attempted to limit the degenerative phenomenon of thefts essentially belong to two groups: mechanical anti-theft devices and electronic anti-theft devices.

As to mechanical-type anti-theft devices, on the market there have been for a long time various systems and locks acting mainly on the blocking of the wheels, preventing their rotation with different approaches, and mainly:
- the traditional chain with locks of various type; however, this is not always useful, as it provides the blocking to a stationary body (post, balustrade, etc.) not easily found on a road, but almost exclusively near pavements (on which however parking is forbidden);
- the disc-lock, solid and sturdy, yet it as well less than practical to use and potentially hazardous, as often one forgets to remove it, ruining the vehicle and risking injuries.

Moreover, the study performed by the Inventor highlighted that the theft of two-wheel vehicles often occurs when a vehicle is left unattended for a short time, or when, often owing to haste, one deems to omit inserting (setting) the anti-theft device.

It also has to be pointed out that there are other relevant drawbacks related to the mechanical anti-theft devices mentioned above, and specifically: the weight, the dirt, the need to have available and take up dedicated compartments to store them and, as mentioned hereto, the lengthy times for the inserting or connecting thereof, with respect to short-stay or hasty parking.

Generic FR 2 554 072 discloses an anti-theft device for a motorcycle comprising two complementary blocking organs which can be mechanically coupled by a mobile pin and which are integral to the vehicle chassis and to a rotatable stand of the latter, respectively.

EP 0 077 431 discloses an anti-theft device for a motorcycle, which device is applied to the parking stand. In particular, fins or other elements are fixed to the stand. When the latter is raised up for parking, the fins rotate and are inserted in a blocking device from which they can be released by a key or the like.

FR 2 667 563 discloses an anti-theft device for two- or three-wheel vehicles equipped with a stand, comprising means to allow to block the stand in position, such blocking means being attached to the vehicle when the stand is in position, the blocking means having a shape substantially like a hook to allow the engagement of the stand.

### Summary of the Invention

Hence, the technical problem solved by the present invention is to provide an anti-theft device for motor vehicles allowing to overcome the drawbacks mentioned above with reference to the known art.

Such a problem is solved by a device according to claim 1.

Preferred features of the present invention are set forth in the dependent claims thereof.

The device of the invention entails the advantage of being solid, quick to install on the vehicle, simple and quick to connect and disconnect, and ultimately safe, without requiring physical efforts, without soiling the user and without constituting a potentially hazardous load to be stored.

In particular, the device consists in a system, preferably an attachment, applicable to the central stand of any vehicle, which is activated and deactivated in a few seconds and, once activated, prevents the closure of the stand, keeping the rear wheel raised. Thus, the device protects from theft, as a vehicle with the stand extended and blocked (the stand cannot fold back/retract, remaining in a parking position and therefore with the rear wheel raised) cannot be moved on its wheels, but only dragged or lifted.

The fact that, according to a preferred embodiment, the device is insertable (connectible) with the pressure of a foot-operated button, avoids a driver's bending down.

### Brief Description of the Figures

Other advantages, features and the operation steps of the present invention will be made evident in the following detailed description of some embodiments thereof, given by way of example and not for limitative purposes. Reference will be made to the figures of the annexed drawings, wherein:
Figures 1A, 1B and 1C show each a perspective view of a respective embodiment of a movable plate of the anti-theft device of the present invention;

- Figures 2A and 2B show each a perspective view of the movable plate, respectively of Figure 1A and 1B, mounted on the stand of a motor vehicle;
- Figure 3 shows a further perspective view of the movable plate of Figure 1B, mounted on the motor vehicle stand, in two operative positions thereof;
- Figures 4A, 4B and 4C show each a perspective view of a respective embodiment of a fixed plate of the anti-theft device of the present invention;
- Figure 5 shows an exploded view of a lock body applicable on the fixed plate of Figure 4A, 4B or 4C;
- Figures 6A and 6B show each a partially exploded perspective view of a respective embodiment of the device according to the invention, applied to a motor vehicle;
- Figures 7A and 7B show each a partially sectional perspective view of the anti-theft device of Figure 6B, in a respective operative configuration of unblocking and of blocking of the motor vehicle stand;
- Figures 8A, 8B, 8C and 8D show each a sectional view of a respective embodiment of a blocking means of the fixed plate of Figure 4A, 4B or 4C; and
- Figures 9A and 9B show each a perspective view of a respective further embodiment of the anti-theft device of the invention applied on a motor vehicle.

### Detailed Description

Hereinafter, there will be described some embodiments of an anti-theft device attachment for two- or three-wheel vehicles according to the present invention. For simplicity's sake, reference will be made to the use of said device in association with a motor vehicle.

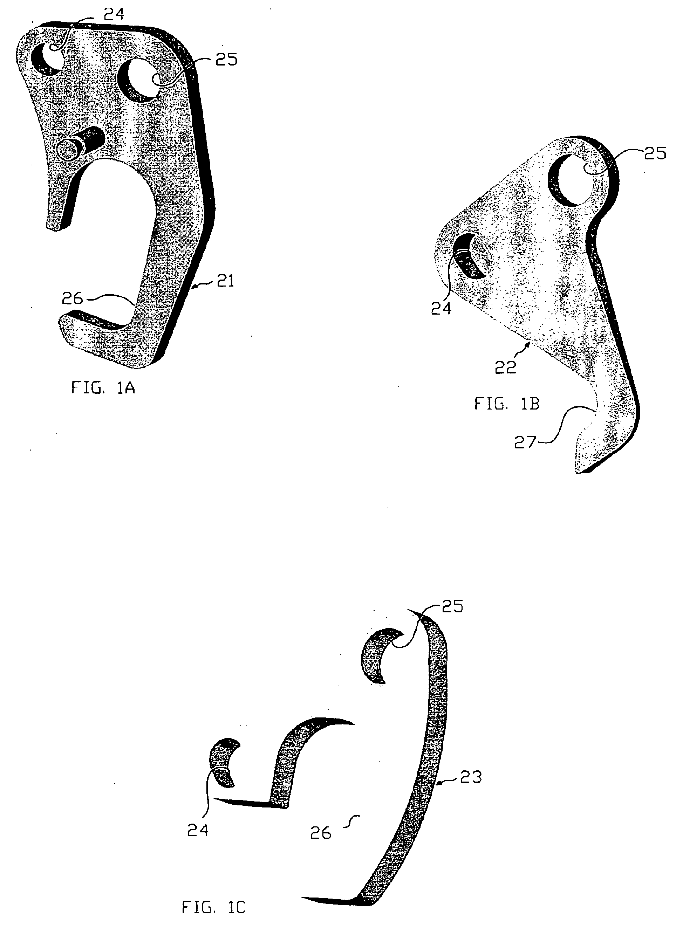

Each of Figures 1A-1C shows a respective embodiments of a first plate of said anti-theft device, respectively denoted by 21, 22 and 23, which will be referred to as movable, as it is apt to be made integral to the central stand of the motor vehicle. Typically, said movable plate is mounted close to a leg of said stand, usually the left one (side from which generally the stand itself is inserted).

Each movable plate 21-23 bears a first through seat, or hole, 24, apt to allow the blocking of the stand according to modes that will be illustrated hereinafter, and a second through seat, or hole, 25, for the fastening of the movable plate itself to the stand. It is understood that the movable plate could have means for blocking to the stand of a type different from the seat 25 proposed hereto.

The movable plates 21, 22 and 23 may be made, e.g., of iron or other metal.

The movable plates 21, 22 and 23 differ in their shaping and in the position of the seats 24 and 25, suitable for application on vehicles and stands of different type.

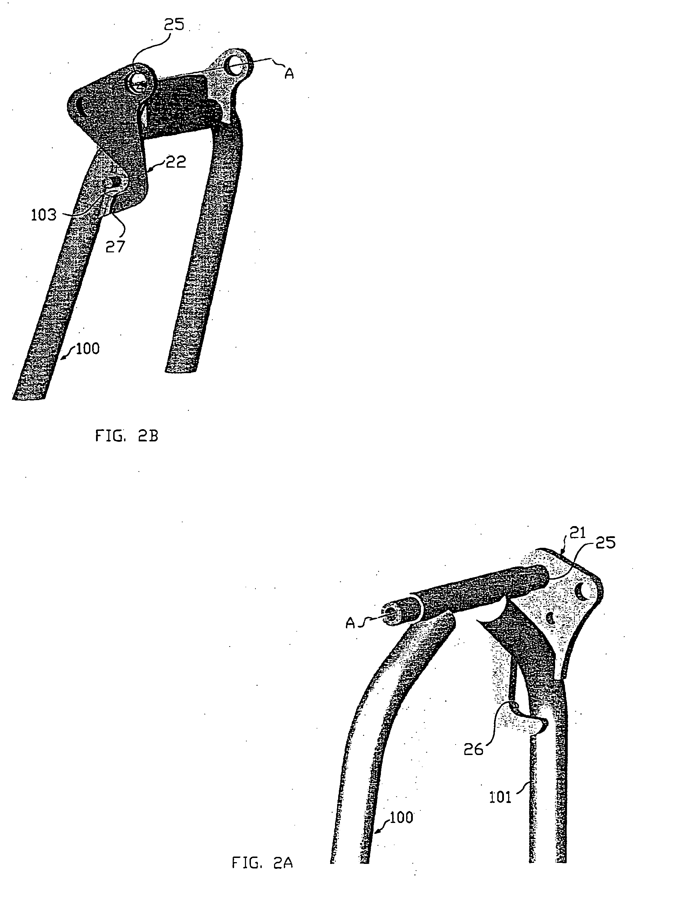

For instance, referring also to Figure 2A, the movable plate 21 of Figure 1A and the movable plate 23 of Figure 1C have a sort of hooking member 26, shaped substantially like a C or an upturned U, apt to engage a leg 101 of the stand itself, the latter denoted by 100. Likewise, the movable plate 22 of Figure 1B has a loop-like shaping 27 allowing its coupling with a corresponding appendage 103 of the stand 100.

As it is shown in said Figures 2A and 2B, the movable plate is arranged with the fastening seat 25 coaxial to the axis of rotation A of the stand 100.

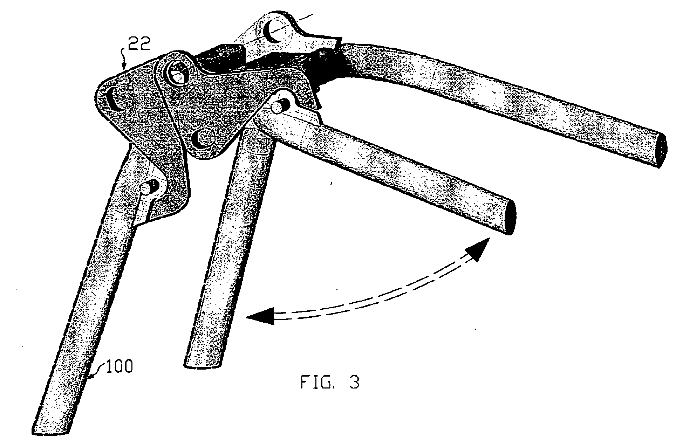

As it is shown in Figure 3, by virtue of the fastening to the stand 100, the movable plate of the anti-theft device (in Figure 3, by way of example, plate 22 being depicted) follows the rotation of the device from the position (depicted by hatching) blocking the motor vehicle on the ground, i.e. of stand in a parking position, to the unblocking one (depicted by solid lines), in which the stand is raised to allow moving of the motor vehicle itself on its wheels.

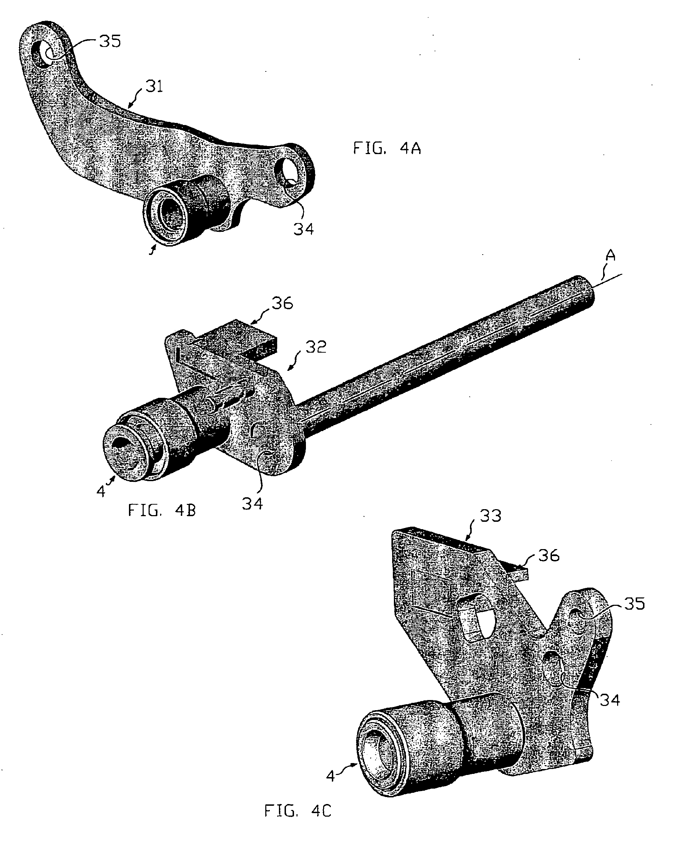

Referring now to Figures 4A, 4B and 4C, the anti-theft device further comprises a second plate, which will be referred to as fixed, as apt to be blocked to the chassis or engine of the motor vehicle. Said figures show each a respective embodiment of said fixed plate, respectively denoted by 31, 32 and 33.

Each of said fixed plates 31-33 bears a through seat, or hole, 34, apt to be arranged coaxially to the axis of rotation A of the stand.

Moreover, each of said fixed plates 31-33 bears means for fastening to the chassis or engine of the motor vehicle. In case of the fixed plate 31 of Figure 4A, said means consists in a through seat, or hole, 35, whereas in the case of the plates 32 and 33 of Figure 4B and 4C it comprises, besides said hole 35 present on the plate 33, also a fastening tab 36.

Also the fixed plates 31, 32 and 33 may, e.g., be made of iron or other metal material.

Moreover, also the fixed plates 31, 32 and 33 differ in their shaping and in the position of the seats, suitable for application on vehicles and stands of different type.

Moreover, each fixed plate 31-33 bears blocking means 4, which, as it will be illustrated in greater detail hereinafter, serves to block the stand 100 in a lowered parking position.

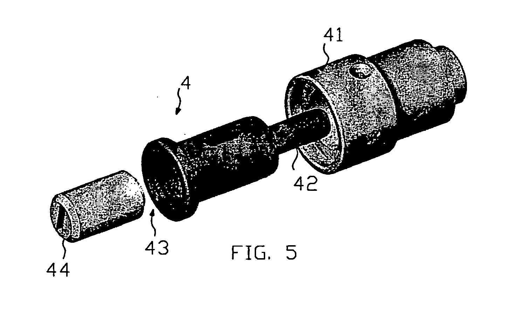

Referring also to Figure 5, the blocking means 4 is of snap type. In particular, in the present example said means comprises a lock body mainly made up of a box or casing 41 fastened to the fixed plate 31-33, and a piston 42 slidable within said casing 41. The piston 42 actually implements a button, and thereto there are associated a snap mechanism 43, apt to activate the stroke of the piston 42, and an actual key lock 44.

In the present example, as it will be made evident also hereinafter, the overall arrangement is such that the piston-button 42 can be activated with the pressure of a foot.

Once activated, the button-piston 42 effects a stroke within the casing 41, until the snap mechanism blocking it is activated. In the present example, said mechanism comprises a pin, apt to block the piston and associated to an elastic return member, e.g. a helical spring.

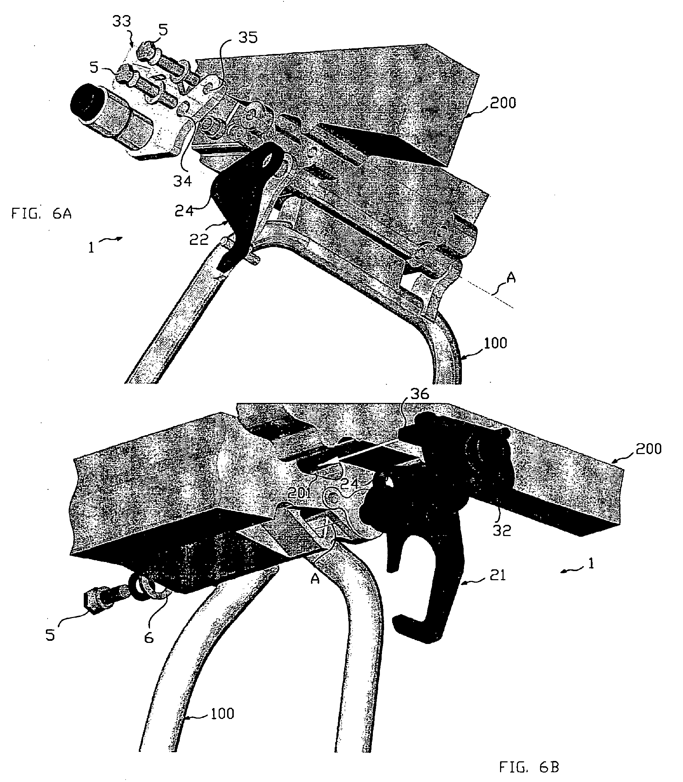

Figures 6A and 6B both show the assembling of the anti-theft device, here generally denoted by 1, onto the motor vehicle; by way of example, reference is made respectively to the movable plate 22 and the fixed plate 33, and to the movable plate 21 and the fixed plate 32.

As it is shown in said figures, the fixed plate can be fixedly constrained to the engine of the motor vehicle, here denoted by 200, or to the chassis, by, e.g., threaded safety pins and/or nuts 5 equipped with a conical washer 6 (Figures 6A and 6B) inserted in the seats 34 and 35 and/or by the tab 36 engaging a suitable seat 201 of the engine guard (Figure 6B).

Said pins 5 and/or nuts 8 can be screwed into holes, and/or in correspondence of axes already existing on the vehicle, so as not to alter its appearance and, above all, not to require relevant structural modifications thereto.

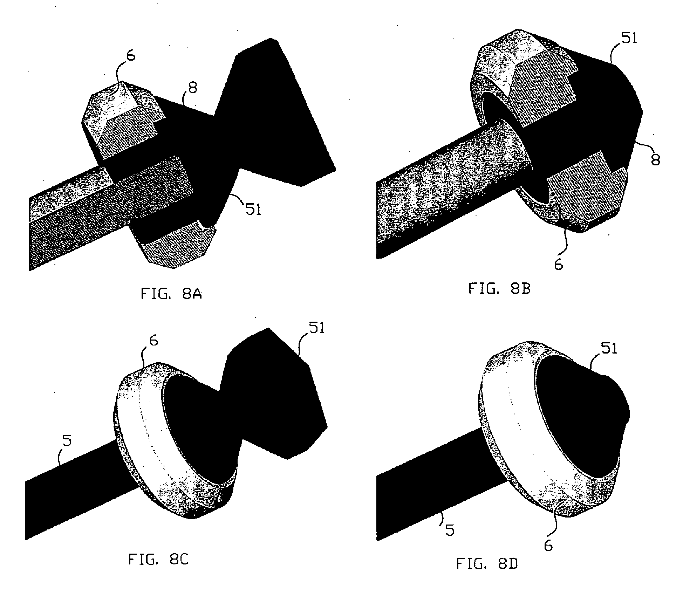

As it is shown in Figures 8A-8D, once they are tightened, the typically hexagonal head 51 of said safety pins 5 could be broken off, leaving a conical body that will form one body with the washer 6 coaxial to the pin/nut itself. Said washer 6 will be idle (i.e., it will freely rotate), thereby preventing any kind of clamping or equivalent means apt to unscrew the pin, and therefore to tamper the anti-theft device 1. Hence, the pins 5 are break-resistant.

In particular, Figure 8A shows a threaded safety nut 8 with whole hexagonal head 51 and idle conical washer 6, Figure 8B shows a threaded safety nut 8 with a broken-off hexagonal head 51 and idle conical washer 6, Figure 8C shows a threaded safety pin 5 with whole hexagonal head 51 and idle conical washer 6, and Figure 8D shows a threaded safety pin 5 with a broken-off hexagonal head 51 and idle conical washer 6.

Should it be necessary to remove the whole anti-theft system from the vehicle, it will suffice to weld, onto the broken-off heads of the safety pins or nuts, a hexagonal nut, which could then be unscrewed with a suitable wrench.

Always referring to Figures 6A and 6B, likewise the movable plate 22, 21 is constrained onto the same axis of rotation A of the stand 100 so as to be movable integrally to the stand itself, and this by pins or equivalent means engaging the seats 25.

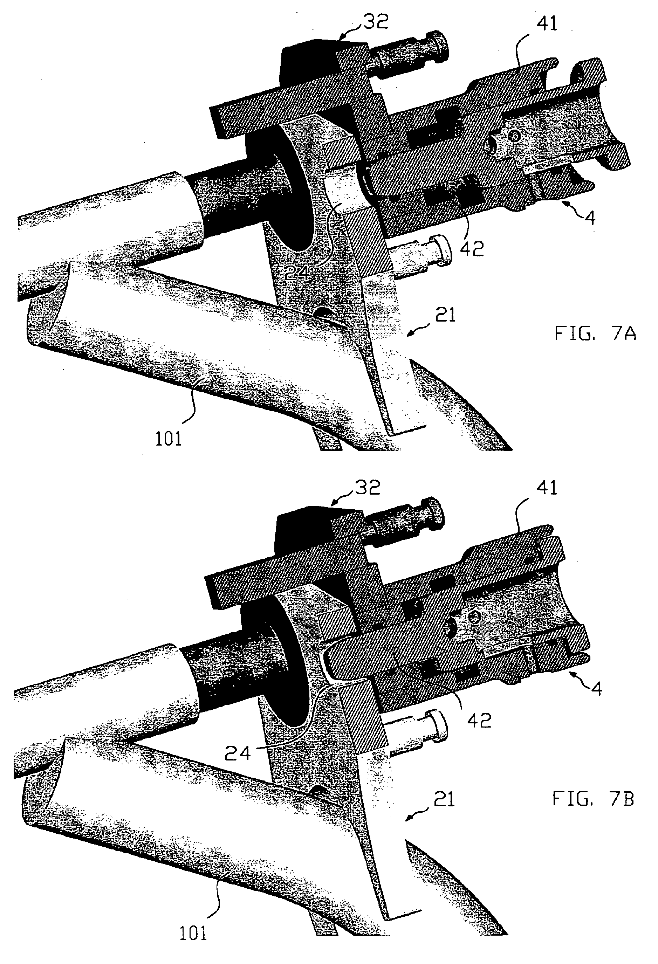

The operation of the anti-theft device is illustrated in greater detail in Figures 7A and 7B, showing the piston 42 of the blocking means 4 associated to the fixed plate 32 in a position respectively disconnected and connected into the seat 24 of the movable plate 21.

Therefore, when the stand 100 is extended in a parking position, the driver could press the piston-button 42 with the foot, thereby avoiding to bend down. The piston 42, by effecting a short stroke through the lock mechanism, will snap-lock in its full-stroke position, sticking into said hole 24 of the movable plate 21, hole coaxial to the piston itself. Through this insertion, the movable plate 21 will form one body with the fixed plate 32, becoming it also fixed (blocked), and thereby blocking the stand 100 integral thereto.

Then, the stand 100 will form one body with the vehicle and it might not retracted, thereby preventing the movement of the same vehicle on its wheels, as the rear wheel (stand being actuated) is always raised off the ground. To free the stand 100, it will suffice to bend down and, with a suitable safety wrench, release the piston 42 that will free the movable plate and therefore the stand integral thereto, allowing its closure and thereby enabling the vehicle to pull off.

According to a variant embodiment, the piston may also be remotely activated and/or deactivated by an electromagnet or an equivalent means activated by a remote control; thus, bending down to disconnect it might be avoided.

Moreover, it could happen, due to design needs, that the fixed plate and the movable plate may be inverted in position, inverting then the position of the lock body as well, which therefore could be associated to the movable plate rather than to the fixed one.

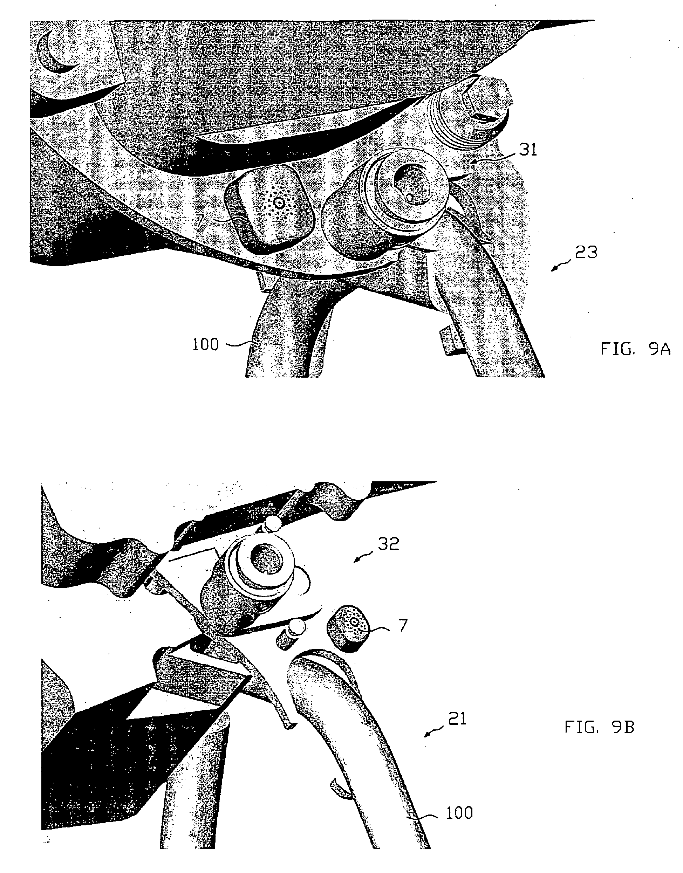

According to an additional variant embodiment, shown in Figure 9A, the fixed plate (by way of example, plate 31 is shown) and/or the movable plate (by way of example, plate 23 is shown) and in Figure 9B, the fixed plate (by way of example, plate 32 is shown) and/or the movable plate (by way of example, plate 21 is shown) may both bear a fixed capsule 7, containing a self-powered electronic sound alarm system, sensitive to vibrations and tilting that trigger off the alarm.

Of course, further variants may provide a different implementation of said vehicle motion-sensitive alarm system.

Moreover, the device of the invention may also not be an attachment mountable at a later stage, but rather be a system integrated into the vehicle directly in the factory.

Hence, by now it will be better appreciated that the device of the invention allows to block and unblock the stand in a few seconds, without carrying out complicated steps, by providing a custom-made blocking system with plates and a lock kit built on purpose, which do not alter the vehicle originality and do not compromise its safety.

Moreover, by now it will be better appreciated that, to be installed, the device of the invention does not require to modify the original structure of the vehicle with welding and holes that may compromise the original safety of the vehicle.

The present invention has been hereto described with reference to preferred embodiments thereof. It is understood that other embodiments might exist, all falling within the concept of the same invention, according to the protective scope defined by the claims hereinafter.

## Claims

1. An anti-theft device (1) for two- or three-wheel vehicles equipped with a stand (100), comprising:
- a first member (31; 32; 33), integral or apt to be made integral to the chassis or engine (200) of the vehicle;
- a second member (21; 22; 23), integral or apt to be made integral to the stand (100) of the vehicle; and
- means (4, 24) for the mutual blocking of said first (31; 32; 33) and second (21; 22; 23) member, such blocking means (4) having snap activating means (42, 43) apt to allow blocking of the stand in position,
**characterised in that** said device (1) is an attachment device removably constrainable to the vehicle and is provided in a kit,
and **in that** said second member (21) is a hooking member (26, 27), shaped substantially like a "C" or an upturned "U" (26) and apt to engage a leg (101) of the stand (100) or having a loop-like shaping (27) allowing its coupling with a corresponding appendage (103) of the stand (100).

2. The anti-theft device (1) according to claim 1, wherein said first (31; 32; 33) and/or said second (21; 22; 23) member are substantially in the form of a plate.

3. The anti-theft device (1) according to any one of the preceding claims, comprising break-resistant safety pins and/or nuts (5, 8), apt to the fastening of said first member (21) to the engine (200) or chassis of the vehicle.

4. The anti-theft device (1) according to any one of the preceding claims, wherein said blocking means (4) comprises a member in the form substantially of a piston (42) constrained to one of said first (31; 32; 33) and second (21; 22; 23) member and a seat (24) apt to receive said piston member (42) obtained on the other one of said members.

5. The anti-theft device (1) according to any one of the preceding claims, wherein said activating means has an activating member (42, 43) that can be activated by a foot.

6. The anti-theft device (1) according to any one of the preceding claims, wherein said blocking means (4) comprises a key lock (44) for constraining and/or releasing said first (31; 32; 33) and second (21; 22; 23) member.

7. The anti-theft device (1) according to any one of the preceding claims, wherein said blocking means (4) comprises electromechanical means apt to remotely constrain and/or release said first (31; 32; 33) and second (21; 22; 23) member.

8. The anti-theft device (1) according to any one of the preceding claims, comprising an alarm system (7) sensitive to the motion of the vehicle.

9. The anti-theft device (1) according to the preceding claim, wherein said alarm system (7) is of acoustic type.

10. The anti-theft device (1) according to claim 8 or 9, wherein said alarm system is arranged in correspondence of said first (31; 32; 33) or second (21; 22; 23) member.

11. A two- or three-wheel vehicle equipped with a stand (100) and comprising an anti-theft device (1) according to any one of the preceding claims.

12. The vehicle according to the preceding claim, which is a motor vehicle.

## Patentansprüche

1. Diebstahlsicherungsvorrichtung (1) für zwei- oder dreirädrige Fahrzeuge, die mit einem Ständer (100) ausgerüstet sind, mit:
- einem ersten Teil (31; 32; 33), das integral mit dem Rahmen oder dem Motor (200) des Fahrzeuges ausgebildet ist oder geeignet ist, mit dem Rahmen oder Motor integral ausgebildet zu sein;
- einem zweiten Teil (21; 22; 23), das integral mit dem Ständer (100) des Fahrzeuges ausgebildet ist oder geeignet ist, mit dem Ständer des Fahrzeuges integral ausgebildet zu sein; und
- einer Einrichtung (4, 24) zum gegenseitigen Blockieren des ersten Teils (31; 32; 33) und des zweiten Teils (21; 22; 23), wobei die Blockiereinrichtung (4) eine Schnappbetätigungseinrichtung (42, 43) hat, die geeignet ist, ein Blockieren des Ständers in seiner Position zu erlauben,
**dadurch gekennzeichnet, dass** die Vorrichtung (1) eine Befestigungsvorrichtung ist, die an dem Fahrzeug lösbar befestigbar ist und in einem Bausatz geliefert wird, und
dass das zweite Teil (21) ein Einhakteil (26, 27) ist, das im Wesentlichen wie ein "C" oder wie ein aufrechtes "U" (26) geformt und geeignet ist, ein Bein (101) des Ständers (100) zu erfassen, oder eine schleifenartige Form (27) hat, die erlaubt, es mit einem entsprechenden Ansatz (103) des Ständers (100) zu kuppeln.

2. Diebstahlsicherungsvorrichtung (1) nach Anspruch 1, wobei das erste Teil (31; 32; 33) und/oder das zweite Teil (21; 22; 23) im Wesentlichen die Form einer Platte haben.

3. Diebstahlsicherungsvorrichtung (1) nach einem der vorhergehenden Ansprüche, mit bruchfesten Sicherheitsstiften und/oder Muttern (5, 8), die geeignet sind, das erste Teil (31) an dem Motor (200) oder an dem Rahmen des Fahrzeuges zu befestigen.

4. Diebstahlsicherungsvorrichtung (1) nach einem der vorhergehenden Ansprüche, wobei die Blockiereinrichtung (4) ein Teil umfasst, das im Wesentlichen die Form eines Kolbens (42) hat, der entweder an dem ersten Teil (31; 32; 33) oder an dem zweiten Teil (21; 22; 23) befestigt ist, und einen Sitz (24), der geeignet ist, das Kolbenteil (42) aufzunehmen, das an dem anderen der Teile angebracht ist.

5. Diebstahlsicherungsvorrichtung (1) nach einem der vorhergehenden Ansprüche, wobei die Betätigungseinrichtung ein Betätigungsteil (42, 43) hat, das durch einen Fuß betätigt werden kann.

6. Diebstahlsicherungsvorrichtung (1) nach einem der vorhergehenden Ansprüche, wobei die Blockiereinrichtung (4) ein Schlüsselschloss (44) umfasst zum Arretieren und/oder Lösen des ersten Teils (31; 32; 33) und des zweiten Teils (21; 22; 23).

7. Diebstahlsicherungsvorrichtung (1) nach einem der vorhergehenden Ansprüche, wobei die Blockiereinrichtung (4) eine elektromechanische Einrichtung umfasst, die geeignet ist, das erste Teil (31; 32; 33) und das zweite Teil (21; 22; 23) fernzulösen und/oder fernzuarretieren.

8. Diebstahlsicherungsvorrichtung (1) nach einem der vorhergehenden Ansprüche, mit einem Alarmsystem (7), das auf die Bewegung des Fahrzeuges anspricht.

9. Diebstahlsicherungsvorrichtung (1) nach dem vorhergehenden Anspruch, wobei das Alarmsystem (7) ein akustisches Alarmsystem ist.

10. Diebstahlsicherungsvorrichtung (1) nach Anspruch 8 oder 9, wobei das Alarmsystem entsprechend dem ersten Teil (31; 32; 33) oder dem zweiten Teil (21; 22; 23) angeordnet ist.

11. Zwei- oder dreirädriges Fahrzeug, ausgerüstet mit einem Ständer (100) und versehen mit einer Diebstahlsicherungsvorrichtung (1) nach einem der vorhergehenden Ansprüche.

12. Fahrzeug nach dem vorhergehenden Anspruch, welches ein Motorfahrzeug ist.

## Revendications

1. Dispositif antivol (1) pour véhicules à deux ou trois roues équipés d'une béquille (100) comprenant :
un premier élément (31; 32; 33) faisant partie intégrante ou apte à faire partie intégrante du châssis ou du moteur (200) du véhicule ;
un second élément (21; 22; 23) faisant partie intégrante ou apte à faire partie intégrante de la béquille (100) du véhicule ; et
un moyen (4, 24) de blocage mutuel desdits premier (31; 32; 33) et second (21; 22; 23) éléments, ce moyen de blocage (4) comportant un moyen d'activation à encliquetage (42, 43) apte à permettre le blocage de la béquille en position,
**caractérisé en ce que** ledit dispositif (1) est un dispositif de fixation pouvant être contraint au véhicule de manière amovible et est fourni dans une trousse,
et **en ce que** ledit second élément (21) est un élément de blocage (26, 27) conformé sensiblement en forme de « C » ou de « U » renversé (26) et apte à engager une patte (101) de la béquille (100) ou ayant la forme d'une boucle (27), permettant son couplage avec un appendice correspondant (103) de la béquille (100).

2. Dispositif antivol (1) selon la revendication 1, dans lequel ledit premier (31; 32; 33) et/ou ledit second (21; 22; 23) élément ont sensiblement la forme d'une plaque.

3. Dispositif antivol (1) selon l'une quelconque des revendications précédentes, comprenant des tiges de sécurité et/ou des écrous résistant à la rupture (5, 8), aptes à la fixation dudit première élément (21) au moteur (200) ou au châssis du véhicule.

4. Dispositif antivol (1) selon l'une quelconque des revendications précédentes, dans lequel ledit moyen de blocage (4) comprend un élément ayant sensiblement la forme d'un piston (42) contraint à l'un desdits premier (31; 32; 33) et second (21; 22; 23) éléments et un siège (24) apte à recevoir ledit élément de piston (42) obtenu sur l'autre desdits éléments.

5. Dispositif antivol (1) selon l'une quelconque des revendications précédentes, dans lequel ledit moyen d'activation comporte un élément d'activation (42, 43) pouvant être actionné par le pied.

6. Dispositif antivol (1) selon l'une quelconque des revendications précédentes, dans lequel ledit moyen de blocage (4) comprend une serrure à clé (44) pour contraindre et/ou libérer lesdits premier (31; 32; 33) et second (21; 22; 23) éléments.

7. Dispositif antivol (1) selon l'une quelconque des revendications précédentes, dans lequel ledit moyen de blocage (4) comprend un moyen électromécanique apte à contraindre et/ou à libérer à distance lesdits premier (31; 32; 33) et second (21; 22; 23) éléments.

8. Dispositif antivol (1) selon l'une quelconque des revendications précédentes, comprenant un système d'alarme (7) sensible au mouvement du véhicule.

9. Dispositif antivol (1) selon la revendication précédente, dans lequel ledit système d'alarme (7) est de type acoustique.

10. Dispositif antivol (1) selon la revendication 8 ou 9, dans lequel ledit système d'alarme est agencé en correspondance avec ledit premier (31; 32; 33) ou ledit second (21; 22; 23) élément.

11. Véhicule à deux ou trois roues équipées d'une béquille (100) et comprenant le dispositif antivol (1) selon l'une quelconque des revendications précédentes.

12. Véhicule selon la revendication précédente, qui est un véhicule à moteur.
